# EUROPEAN PATENT APPLICATION

(11) **EP 4 725 999 A1**
(43) Date of publication of application: **15.04.2026**
(21) Application number: 24819045.6
(22) Date of filing: 23.04.2024
(51) Int. Cl.: C09D 11/322, B41J 2/01, B41M 5/00

(54) **INK-JET INK FOR IMPERMEABLE SUBSTRATES, INK SET, IMAGE RECORDING METHOD, AND METHOD FOR PRODUCING LAMINATE**

(30) Priority: 08.06.2023 JP 2023095065
(71) Applicant: FUJIFILM Corporation, Tokyo 106-8620 (JP)
(72) Inventor: SATO, Ayato, Ashigarakami-gun, Kanagawa 258-8577 (JP); IKOSHI, Masao, Ashigarakami-gun, Kanagawa 258-8577 (JP)
(74) Representative: HGF
(86) International application number: PCT/JP2024/015909
(87) International publication number: WO 2024/252807

(57) **Abstract**

There is provided an ink jet ink for an impermeable base material, which can improve retort resistance of a laminate obtained by laminating a base material for lamination on an image of an image recorded material obtained by applying an ink jet ink onto an impermeable base material to record an image.

## Description

### BACKGROUND OF THE INVENTION

### 1. Field of the Invention

The present disclosure relates to an ink jet ink for an impermeable base material, an ink set, an image recording method, and a method of producing a laminate.

### 2. Description of the Related Art

In recent years, a technology of recording an image on an impermeable base material (also referred to as a non-absorptive recording medium or the like), such as a polyolefin base material or a polyethylene terephthalate base material, using an ink jet ink has been studied.

For example, JP2021-102693A discloses an ink jet ink containing two specific urethane resin particles as an ink jet ink used for image recording on a non-absorptive recording medium or the like, which can obtain an image recorded material having excellent rub resistance, glossiness, laminate peeling resistance, and blocking resistance.

### SUMMARY OF THE INVENTION

In some cases, an image is recorded on an impermeable base material by applying an ink jet ink to obtain an image recorded material, and a laminate is manufactured by laminating a base material for lamination on the image in the obtained image recorded material. In some cases, the obtained laminate is required to have retort resistance.

Here, the retort resistance means resistance to heating and pressurization sterilization at a temperature of 100°C or higher. The retort resistance is distinguished from boiling resistance, which is resistance to hot water sterilization at a temperature of lower than 100°C, in that the retort resistance is resistance to heating and pressurization sterilization at a temperature of 100°C or higher. The retort resistance is resistance to treatment under more severe temperature conditions and more severe pressure conditions than the boiling resistance.

An object to be achieved by one embodiment of the present disclosure is to provide an ink jet ink that can improve retort resistance of a laminate in a case where an image is recorded on an impermeable base material by applying an ink jet ink to obtain an image recorded material, and a base material for lamination is laminated on the image in the obtained image recorded material to produce a laminate.

Another object to be achieved by another embodiment of the present disclosure is to provide an ink set including the ink jet ink, and an image recording method and a method of producing a laminate using the ink jet ink.

The present disclosure includes the following aspects.
<1> An ink jet ink for an impermeable base material, comprising:
   water;
   a pigment;
   a pigment dispersing resin; and
   resin particles,
   in which the pigment dispersing resin contains a first urethane resin, and
   the resin particles contain a second urethane resin.
<2> The ink jet ink for an impermeable base material according to <1>,
   in which a ratio of the urethane resin in all contained resin components is 80% by mass or more.
<3> The ink jet ink for an impermeable base material according to <1> or <2>,
   in which both the first urethane resin and the second urethane resin include a polyol unit A that is at least one of polyol units not containing an acid group.
<4> The ink jet ink for an impermeable base material according to <3>,
   in which a proportion of the polyol unit A in the polyol units not containing an acid group, which is contained in the first urethane resin, is 60 mol% or more.
<5> The ink jet ink for an impermeable base material according to <3> or <4>,
   in which a proportion of the polyol unit A in the polyol units not containing an acid group, which is contained in the second urethane resin, is 60 mol% or more.
<6> The ink jet ink for an impermeable base material according to any one of <1> to <5>,
   in which an absolute value of a difference between a glass transition temperature of the first urethane resin and a glass transition temperature of the second urethane resin is 40°C or lower.
<7> The ink jet ink for an impermeable base material according to any one of <1> to <6>,
   in which an acid value of the first urethane resin is 80 mgKOH/g to 170 mgKOH/g, and an acid value of the second urethane resin is 10 mgKOH/g to 50 mgKOH/g.
<8> The ink jet ink for an impermeable base material according to any one of <1> to <7>,
   in which an acid value of the ink jet ink is 1.8 mgKOH/g to 4.0 mgKOH/g.
<9> An ink set comprising:
   the ink jet ink for an impermeable base material according to any one of <1> to <8>; and
   a pretreatment liquid containing water and a coagulating agent.
<10> The ink set according to <9>,
   in which the pretreatment liquid further contains a third urethane resin.
<11> The ink set according to <10>,
   in which all of the first urethane resin, the second urethane resin, and the third urethane resin contain a polyol unit A that is at least one of polyol units not containing an acid group.
<12> The ink set according to <11>,
   in which a proportion of the polyol unit A in the polyol units not containing an acid group, which is contained in the third urethane resin, is 60 mol% or more.
<13> An image recording method in which the ink jet ink for an impermeable base material according to any one of <1> to <8> is used, the method comprising:
   a step of applying the ink jet ink for an impermeable base material onto an impermeable base material by an ink jet recording method.
<14> An image recording method in which the ink set according to any one of <9> to <12> is used, the method comprising:
   a step of applying the pretreatment liquid onto an impermeable base material; and
   a step of applying the ink jet ink for an impermeable base material onto the impermeable base material to which the pretreatment liquid has been applied, by an ink jet recording method.
<15> A method of producing a laminate, comprising:
   a step of obtaining an image recorded material that includes the impermeable base material and an image disposed on the impermeable base material by the image recording method according to <13> or <14>; and
   a step of laminating a base material for lamination on a side of the image recorded material on which the image is disposed, to obtain a laminate.

According to one embodiment of the present disclosure, there is provided an ink jet ink that can improve retort resistance of a laminate in a case where an image is recorded on an impermeable base material by applying an ink jet ink to obtain an image recorded material, and a base material for lamination is laminated on the image in the obtained image recorded material to produce a laminate.

According to another embodiment of the present disclosure, there is provided an ink set including the ink jet ink, and an image recording method and a method of producing a laminate using the ink jet ink.

### DESCRIPTION OF THE PREFERRED EMBODIMENTS

In the present specification, a numerical range shown using "to" indicates a range including the numerical values described before and after "to" as a minimum value and a maximum value, respectively.

In a numerical range described in a stepwise manner in the present specification, an upper limit or a lower limit described in a certain numerical range may be replaced with an upper limit or a lower limit in another numerical range described in a stepwise manner. Further, in a numerical range described in the present specification, an upper limit or a lower limit described in a certain numerical range may be replaced with a value described in an example.

In the present specification, in a case where a plurality of substances corresponding to respective components in a composition are present, the amount of the respective components in the composition indicates the total amount of the plurality of substances present in the composition unless otherwise specified.

In the present specification, a combination of two or more preferred embodiments is a more preferred embodiment.

In the present specification, the meaning of the term "step" includes not only an independent step but also a step whose intended purpose is achieved even in a case where the step is not clearly distinguished from other steps.

In the present specification, the term "image" denotes an entire film formed by applying a pretreatment liquid and an ink in this order, and the term "image recording" denotes formation of an image (that is, the film).

Further, the concept of "image" in the present specification also includes a solid image.

In the present specification, "(meth)acrylate" is a concept including both acrylate and methacrylate. In addition, "(meth)acryl" is a concept that includes both acryl and methacryl.

### [Inkjet ink for impermeable base material]

An ink jet ink for an impermeable base material according to the present disclosure (hereinafter, also simply referred to as "the ink according to the present disclosure") contains water, a pigment, a pigment dispersing resin, and resin particles, in which the pigment dispersing resin contains a first urethane resin, and the resin particles contain a second urethane resin.

The ink according to the present disclosure is mainly used for an impermeable base material. That is, the ink according to the present disclosure is an ink used for recording an image on an impermeable base material. The details of the impermeable base material will be described below. Among these, it is preferable that the impermeable base material is a resin base material and that the ink according to the present disclosure is used for a resin base material.

In the present disclosure, the first urethane resin means a urethane resin contained in the pigment dispersing resin, and the second urethane resin means a urethane resin contained in the resin particles.

The first urethane resin and the second urethane resin may be the same kind of urethane resin or different kinds of urethane resins.

In addition, each of the first urethane resin and the second urethane resin may be only one kind or two or more kinds.

The ink according to the present disclosure is used for a purpose of recording an image by applying an ink jet ink onto an impermeable base material by an ink jet method to obtain an image recorded material, and laminating a base material for lamination on the image in the obtained image recorded material to produce a laminate.

With the ink according to the present disclosure, the retort resistance of the above-described laminate can be improved.

The reason why such an effect is exhibited is assumed as follows.

As described above, the retort resistance means resistance to heating and pressurization sterilization at a temperature of 100°C or higher.

The retort resistance of the laminate is evaluated by the difficulty of occurrence of lamination floating (that is, peeling of the image or the lamination base material) in a case where the laminate is subjected to a retort treatment (that is, a heating and pressurization sterilization treatment at a temperature of 100°C or higher). The higher the difficulty of occurrence of the lamination float, the more excellent the retort resistance of the laminate.

In the ink according to the present disclosure, both the pigment dispersing resin and the resin particles in the ink contain a urethane resin (that is, the first urethane resin and the second urethane resin). As a result, it is considered that the ratio of the urethane resin in the entire resin component in the ink film (that is, the image) formed by the ink is increased, and as a result, the flexibility of the image (that is, the followability to the deformation of the impermeable base material) is improved. As a result of the improvement in the flexibility of the image, it is considered that the lamination floating is less likely to occur in a case where the laminate is subjected to the retort treatment (that is, the retort resistance of the laminate is improved).

The ratio of the urethane resin in the entire resin component in the ink according to the present disclosure (that is, the total ratio of the first urethane resin and the second urethane resin) is preferably 70% by mass or more and more preferably 80% by mass or more.

In a case where the ratio of the urethane resin is 70% by mass or more, the retort resistance of the laminate is further improved.

Hereinafter, each component that can be contained in the ink will be described.

### <Water>

The ink according to the embodiment of the present disclosure contains water.

A content of the water is preferably 10% by mass or more, more preferably 20% by mass or more, still more preferably 30% by mass or more, and particularly preferably 50% by mass or more with respect to the total amount of the ink.

The upper limit of the content of the water is appropriately determined according to contents of other components, and is, for example, 90% by mass, preferably 85% by mass, and more preferably 80% by mass with respect to the total amount of the ink.

### <Pigment>

The ink of the present disclosure contains at least one pigment.

In addition, the pigment may be an organic pigment or an inorganic pigment.

Examples of the organic pigment include an azo pigment, a polycyclic pigment, a chelate dye, a nitro pigment, a nitroso pigment, and aniline black. Among these, an azo pigment or a polycyclic pigment is preferable as the organic pigment.

Examples of the azo pigment include azo lake, an insoluble azo pigment, a condensed azo pigment, and a chelated azo pigment.

Examples of the polycyclic pigment include a phthalocyanine pigment, a perylene pigment, a perinone pigment, an anthraquinone pigment, a quinacridone pigment, a dioxazine pigment, an indigo pigment, a thioindigo pigment, an isoindolinone pigment, and a quinophthalone pigment.

Examples of the chelate dye include a basic dye-type chelate and an acid dye-type chelate.

Examples of the inorganic pigment include titanium oxide, iron oxide, calcium carbonate, barium sulfate, aluminum hydroxide, barium yellow, cadmium red, chrome yellow, and carbon black.

Examples of the pigment include pigments described in "Encyclopedia of Pigments" edited by Seishiro Ito (2000), "Industrial Organic Pigments", W. Herbst, K. Hunger, JP2002-12607A, JP2002-188025A, JP2003-26978A, and JP2003-342503A.

A content of the pigment is preferably 1% by mass to 20% by mass, more preferably 1% by mass to 15% by mass, and still more preferably 1% by mass to 10% by mass with respect to the total amount of the ink.

### <Pigment dispersing resin>

The ink according to the present disclosure contains at least one pigment dispersing resin.

The pigment dispersing resin contains at least one first urethane resin.

The pigment dispersing resin may include at least one non-urethane resin (that is, a resin other than the urethane resin; for example, an acrylic resin).

Examples of the non-urethane resin include an acrylic resin.

However, from the viewpoint of further improving the retort resistance of the laminate, a ratio of the first urethane resin in the pigment dispersing resin is preferably 50% by mass to 100% by mass, more preferably 60% by mass to 100% by mass, still more preferably 80% by mass to 100% by mass, and even more preferably 90% by mass to 100% by mass.

### (First urethane resin)

The first urethane resin is not particularly limited, and may be a known urethane resin (that is, a resin including a urethane bond).

The first urethane resin can be formed by a reaction between a polyisocyanate and a polyol, as in a known urethane resin. In this case, the first urethane resin may contain a polyisocyanate unit (that is, a structural unit derived from a polyisocyanate) and a polyol unit (that is, a structural unit derived from a polyol).

As the polyol and the polyisocyanate for forming a first urethane resin, for example, the description in paragraphs 0031 to 0036 of JP2001-247787A, paragraphs 0033 to 0118 of WO2016/052053A, and paragraphs 0066 to 0223 of WO2016/152254A can be referred to.

### (Polyisocyanate unit and polyisocyanate)

The first urethane resin may have at least one polyisocyanate unit.

The polyisocyanate for forming the polyisocyanate unit may be a polyisocyanate containing two isocyanate groups (that is, a diisocyanate (that is, a bifunctional isocyanate)) or a polyisocyanate containing three or more isocyanate groups (that is, a trifunctional or higher functional isocyanate).

A bifunctional to hexafunctional isocyanate is preferable as the polyisocyanate.

Examples of the bifunctional isocyanate include hexamethylene diisocyanate (abbreviated as HDI), trimethylhexamethylene diisocyanate (abbreviated as TMHDI), isophorone diisocyanate (abbreviated as IPDI), xylene diisocyanate (abbreviated as XDI), hydrogenated xylene diisocyanate (abbreviated as HXDI), norbornane diisocyanate (abbreviated as NBDI), diphenylmethane diisocyanate (abbreviated as MDI), hydrogenated diphenylmethane diisocyanate (abbreviated as HMDI), and tolylene diisocyanate (abbreviated as TDI).

Further, a bifunctional isocyanate derived from the above-described specific examples can also be used as the bifunctional isocyanate. Examples thereof include DURANATE (registered trademark) D101, D201, and A101 (manufactured by Asahi Kasei Corporation).

In addition, it is preferable that the trifunctional or higher functional isocyanate is a reaction product of at least one selected from the group consisting of a bifunctional isocyanate and at least one selected from the group consisting of a compound containing three or more active hydrogen groups (for example, a trifunctional or higher functional polyol compound, a trifunctional or higher functional polyamine compound or a trifunctional or higher functional polythiol compound).

The number of moles (number of molecules) of the bifunctional isocyanate to react with the compound containing three or more active hydrogen groups is preferably 0.6 times or greater, more preferably 0.6 times to 5 times, still more preferably 0.6 times to 3 times, and even still more preferably 0.8 times to 2 times with respect to the number of moles of the active hydrogen group (number of equivalents of the active hydrogen group) in the compound containing three or more active hydrogen groups.

Examples of the bifunctional isocyanate for forming a trifunctional or higher functional isocyanate include the bifunctional isocyanates described in the above-described specific examples.

Examples of the compound containing three or more active hydrogen groups for forming a trifunctional or higher functional isocyanate include the compounds described in paragraphs 0057 and 0058 of WO2016/052053A.

Examples of the trifunctional or higher functional isocyanate include an adduct type trifunctional or higher functional isocyanate, an isocyanurate type trifunctional or higher functional isocyanate, and a biuret type trifunctional or higher functional isocyanate.

Examples of commercially available products of the adduct type trifunctional or higher functional isocyanate include TAKENATE (registered trademark) D-102, D-103, D-103H, D-103M2, P49-75S, D-110N, D-120N, D-140N, and D-160N (all manufactured by Mitsui Chemicals, Inc.), DESMODUR (registered trademark) L75 and UL57SP (Sumika Bayer Urethane Co., Ltd.), CORONATE (registered trademark) HL, HX, and L (Nippon Polyurethane Industry Co., Ltd.), and P301-75E (Asahi Kasei Corporation.).

Examples of commercially available products of the isocyanate type trifunctional or higher functional isocyanate include TAKENATE (registered trademark) D-127N, D-170N, D-170HN, D-172N, and D-177N (all manufactured by Mitsui Chemicals, Inc.), SUMIDUR N3300 and DESMODUR (registered trademark) N3600, N3900, and Z4470BA (all manufactured by Sumika Bayer Urethane Co., Ltd.), CORONATE (registered trademark) HX and HK (both manufactured by Nippon Polyurethane Industry Co., Ltd.), and DURANATE (registered trademark) TPA-100, TKA-100, TSA-100, TSS-100, TLA-100, and TSE-100 (all manufactured by Asahi Kasei Corporation.).

Examples of commercially available products of the biuret type trifunctional or higher functional isocyanate include TAKENATE (registered trademark) D-165N and NP1100 (both manufactured by Mitsui Chemicals, Inc.), DESMODUR (registered trademark) N3200 (Sumika Bayer Urethane Co., Ltd.), and DURANATE (registered trademark) 24A-100 (Asahi Kasei Corporation.).

At least one of the polyisocyanates may be a polyisocyanate containing a hydrophilic group. The polyisocyanate containing a hydrophilic group can refer to the description in paragraphs 0112 to 0118 and 0252 to 0254 of WO2016/052053A.

At least one of the polyisocyanates may be a polyisocyanate containing a polymerizable group. The isocyanate containing a polymerizable group can refer to the description in paragraphs 0084 to 0089, 0203, and 0205 of WO2016/052053A.

### - Polyol unit and polyol -

The urethane resin may contain at least one polyol unit.

The polyol may be a polyol having two hydroxy groups (that is, a diol) or a polyol having three or more hydroxy groups.

From the viewpoint of further improving the retort resistance of the laminate, the urethane resin preferably includes a polyol unit not containing an acid group.

From the viewpoint of further improving the retort resistance of the laminate, the polyol unit not containing an acid group is preferably a polymer polyol unit.

Examples of the polymer polyol for forming the polymer polyol unit include polyethylene glycol, polypropylene glycol, polytetramethylene glycol, polyester polyol (for example, polyester diol), polycarbonate diol, and polycaprolactone diol.

The molecular weight of each of the polymer polyol unit and the polymer polyol is, for example, 500 to 10,000, and preferably 800 to 5,000.

The polyol unit in the urethane resin preferably includes a polytetramethylene glycol unit, a polycarbonate diol unit, or a polyester polyol unit. As a result, the retort resistance of the laminate is further improved.

A commercially available product may be used as the polymer polyol for forming the polymer polyol unit.

Examples of a commercially available product of polytetramethylene glycol include PTMG-2000 manufactured by Mitsubishi Chemical Corporation.

Examples of a commercially available product of polyester polyol include P-2010 manufactured by Kuraray Co., Ltd.

Examples of the commercially available product of polycarbonate diol include DURANOL T5651 (manufactured by Asahi Kasei Corporation), DURANOL T5652 (manufactured by Asahi Kasei Corporation), DURANOL T6002 (manufactured by Asahi Kasei Corporation), DURANOL T6001 (manufactured by Asahi Kasei Corporation), BENEBiOL HS0830B (manufactured by Mitsubishi Chemical Corporation), BENEBiOL HS0840H (manufactured by Mitsubishi Chemical Corporation), BENEBiOL NL1010DB (manufactured by Mitsubishi Chemical Corporation), and BENEBiOL NL2010DB (manufactured by Mitsubishi Chemical Corporation).

From the viewpoint of further improving the pigment dispersibility and the storage stability of the ink, the first urethane resin also preferably includes a polyol unit containing an acid group (for example, a carboxy group or a salt thereof).

Examples of the polyol containing an acid group include dimethylolpropionic acid (DMPA) and dimethylolbutanoic acid (DMBA).

By adjusting the content of the polyol containing an acid group in the first urethane resin, the acid value of the first urethane resin and the ink acid value described later can be easily adjusted to a preferred range.

From the viewpoint of further improving the retort resistance of the laminate and the viewpoint of further improving the pigment dispersibility and the storage stability of the ink, the first urethane resin particularly preferably includes both a polyol unit containing no acid group and a polyol unit containing an acid group (for example, a carboxy group or a salt thereof).

### - Acid value -

The acid value of the first urethane resin is preferably 70 mgKOH/g to 180 mgKOH/g and more preferably 80 mgKOH/g to 170 mgKOH/g.

In a case where the acid value of the first urethane resin is 70 mgKOH/g or more, the dispersion stability of the pigment in the ink is further improved, and as a result, the storage stability of the ink is further improved.

In a case where the acid value of the first urethane resin is 200 mgKOH/g or less, the flexibility of the ink film (that is, the image) is further improved, and as a result, the retort resistance of the laminate is further improved.

In the present disclosure, the acid value of the urethane resin is a value measured by neutralization titration.

In addition, the first urethane resin is preferably a water-soluble urethane resin.

In the present disclosure, the term "water-soluble" indicates a property that 1 g or greater of a substance is dissolved in 100 g of water at 25°C.

### - Glass transition temperature (Tg) -

From the viewpoint of further improving the retort resistance of the laminate, the glass transition temperature of the first urethane resin is preferably -100°C to 50°C, more preferably -90°C to 30°C, still more preferably -80°C to 15°C, and even more preferably -70°C to 0°C.

In the present disclosure, the glass transition temperature (Tg) of the urethane resin is measured using a differential scanning calorimeter, for example, a product name "DSC-60" manufactured by Shimadzu Corporation.

### - Weight-average molecular weight -

The weight-average molecular weight of the first urethane resin is not particularly limited, but is preferably in a range of 1,000 to 300,000, more preferably in a range of 2,000 to 200,000, and still more preferably in a range of 10,000 to 150,000.

In the present disclosure, the weight-average molecular weight (Mw) is measured by gel permeation chromatography (GPC). The measurement according to GPC is performed by connecting three columns of TSKgeL Super HZM-H, TSKgeL Super HZ4000, and TSKgel Super HZ2000 (all product names, manufactured by Tosoh Corporation) in series using HLC-8220GPC (manufactured by Tosoh Corporation) and tetrahydrofuran (THF) as an eluent. Further, the measurement is performed under conditions of a sample concentration of 0.45% by mass, a flow rate of 0.35 ml/min, a sample injection volume of 10 µl, and a measurement temperature of 40°C using a differential refractive index detector. Further, the calibration curve is prepared using eight samples of "F-40", "F-20", "F-4", "F-1", "A-5000", "A-2500", "A-1000", and "n-propylbenzene" which are "Standard Samples TSK standard, polystyrene" (manufactured by Tosoh Corporation).

### - Ratio of content of pigment to content of first urethane resin -

The ratio between the content of the pigment and the content of the first urethane resin is preferably in a range of 1:0.04 to 1:3, more preferably in a range of 1:0.05 to 1:1, and still more preferably in a range of 1:0.05 to 1:0.5 on a mass basis.

### - Content of first urethane resin with respect to total amount of ink -

The content of the first urethane resin with respect to the total amount of the ink is preferably 0.1% by mass to 10% by mass, more preferably 0.3% by mass to 5% by mass, and still more preferably 0.5% by mass to 2.5% by mass.

### <Resin particles>

The ink according to the present disclosure contains at least one kind of resin particles.

The resin particles contain at least one second urethane resin.

The resin particles may contain at least one non-urethane resin (that is, a resin other than the urethane resin).

Examples of the non-urethane resin include an acrylic resin and a vinyl chloride resin.

However, from the viewpoint of further improving the retort resistance of the laminate, a ratio of the second urethane resin in the resin particles is preferably 50% by mass to 100% by mass, more preferably 60% by mass to 100% by mass, still more preferably 80% by mass to 100% by mass, and even more preferably 90% by mass to 100% by mass.

### (Second urethane resin)

The second urethane resin may also be a known urethane resin (that is, a resin containing a urethane bond) as in the first urethane resin.

The second urethane resin can also be formed by a reaction between a polyisocyanate and a polyol, as in a known urethane resin. In this case, the second urethane resin may contain a polyisocyanate unit (that is, a structural unit derived from a polyisocyanate) and a polyol unit (that is, a structural unit derived from a polyol).

Specific examples and preferred aspects of the polyol unit and the polyisocyanate unit (as well as the polyol and the polyisocyanate for forming these units) in the second urethane resin are the same as the specific examples and the preferred aspects of the polyol unit and the polyisocyanate unit (as well as the polyol and the polyisocyanate for forming these units) in the first urethane resin described above.

In addition, a preferred range of the weight-average molecular weight of the second urethane resin is the same as the preferred range of the weight-average molecular weight of the first urethane resin.

However, the second urethane resin and the first urethane resin may be the same kind of urethane resin or different kinds of urethane resins.

From the viewpoint of further improving the dispersion stability of the resin particles containing the second urethane resin and the storage stability of the ink, the second urethane resin preferably contains a polyol unit containing an acid group (for example, a carboxy group or a salt thereof).

Examples of the polyol containing an acid group include dimethylolpropionic acid (DMPA) and dimethylolbutanoic acid (DMBA).

By adjusting the content of the polyol containing an acid group in the second urethane resin, the acid value of the second urethane resin described later and the ink acid value described later can be easily adjusted to a preferred range.

### - Acid value -

The acid value of the second urethane resin is preferably 5 mgKOH/g to 60 mgKOH/g and more preferably 10 mgKOH/g to 50 mgKOH/g.

In a case where the acid value of the second urethane resin is 5 mgKOH/g or more, the dispersion stability of the resin particles in the ink is further improved, and as a result, the storage stability of the ink is further improved.

In a case where the acid value of the second urethane resin is 60 mgKOH/g or less, the flexibility of the ink film (that is, the image) is further improved, and as a result, the retort resistance of the laminate is further improved.

Examples of a preferred combination of the acid value of the first urethane resin and the acid value of the second urethane resin include a combination in which the acid value of the first urethane resin is 70 mgKOH/g to 180 mgKOH/g (more preferably 80 mgKOH/g to 170 mgKOH/g) and the acid value of the second urethane resin is 5 mgKOH/g to 60 mgKOH/g (more preferably 10 mgKOH/g to 50 mgKOH/g).

In addition, the second urethane resin is preferably a water-insoluble urethane resin.

In the present disclosure, the term "water-insoluble" indicates a property that less than 1 g of a substance is dissolved in 100 g of water at 25°C.

### - Glass transition temperature (Tg) -

A preferred range of the glass transition temperature of the second urethane resin is the same as the preferred range of the glass transition temperature of the first urethane resin.

An absolute value of a difference between the glass transition temperature of the first urethane resin and the glass transition temperature of the second urethane resin (hereinafter, also referred to as a "Tg difference") is preferably 50°C or lower, more preferably 40°C or lower, still more preferably 30°C or lower, and even more preferably 20°C or lower.

In a case where the Tg difference is 50°C or lower, the uniformity and toughness of the ink film are further improved, and as a result, the retort resistance of the laminate is further improved.

### - Content of second urethane resin with respect to total amount of ink -

A content of the second urethane resin with respect to the total amount of the ink is preferably 1.0% by mass to 10.0% by mass, more preferably 2.0% by mass to 10.0% by mass, and still more preferably 2.0% by mass to 8.0% by mass.

### - Polyol unit A (common polyol unit) -

In the ink according to the present disclosure, it is preferable that both the first urethane resin and the second urethane resin include a polyol unit A (that is, a polyol unit common to the first urethane resin and the second urethane resin, which does not contain an acid group) as a common polyol unit, the polyol unit A being at least one of polyol units that do not contain an acid group.

As a result, since an interaction between the pigment dispersing resin containing the first urethane resin and the resin particles containing the second urethane resin occurs, the ink film is further toughened, and as a result, the retort resistance of the laminate is further improved.

In a case where both the first urethane resin and the second urethane resin contain the polyol unit A (that is, a polyol unit common to the first urethane resin and the second urethane resin, which does not contain an acid group), each of the first urethane resin and the second urethane resin may contain a polyol unit other than the polyol unit A (that is, a polyol unit not common to the first urethane resin and the second urethane resin, which does not contain an acid group), which does not contain an acid group.

In addition, in a case where both the first urethane resin and the second urethane resin contain the polyol unit A, at least one of the first urethane resin or the second urethane resin may contain a polyol unit containing an acid group.

In a case where both the first urethane resin and the second urethane resin contain the polyol unit A (common polyol unit), a proportion of the polyol unit A in the polyol units not containing an acid group and is contained in the first urethane resin (hereinafter, also referred to as a "common polyol ratio" in the first urethane resin) is preferably 40 mol% or more, more preferably 50 mol% or more, and still more preferably 60 mol% or more.

In a case where both the first urethane resin and the second urethane resin contain the polyol unit A (common polyol unit), a proportion of the polyol unit A in the polyol units not containing an acid group and is contained in the second urethane resin (hereinafter, also referred to as a "common polyol ratio" in the second urethane resin) is preferably 40 mol% or more, more preferably 50 mol% or more, and still more preferably 60 mol% or more.

### <Water-soluble organic solvent>

From the viewpoint of jetting stability of the ink, the ink according to the present disclosure preferably contains at least one water-soluble organic solvent.

Here, the meaning of water-soluble is as described above.

The type of the water-soluble organic solvent is not particularly limited, and examples thereof include:
monoalcohol having 1 to 4 carbon atoms;
alkylene glycol (also known as diol) such as ethylene glycol, propylene glycol (also known as 1,2-propanediol), 1,3-propanediol, 1,3-butanediol, 1,4-butanediol, 2-butene-1,4-diol, 2-ethyl-1,3-hexanediol, 2-methyl-2,4-pentanediol, 1,2-octanediol, 1,2-hexanediol, 1,2-pentanediol, and 4-methyl-1,2-pentanediol;
triol such as glycerin, 1,2,6-hexanetriol, and trimethylolpropane;
alkylene glycol monoalkyl ether such as ethylene glycol monoalkyl ether and propylene glycol monoalkyl ether;
polyalkylene glycol such as diethylene glycol, triethylene glycol, tetraethylene glycol, pentaethylene glycol, dipropylene glycol, and polyoxyethylene polyoxypropylene glycol;
polyalkylene glycol ether such as diethylene glycol monoalkyl ether, triethylene glycol monoalkyl ether, tripropylene glycol monoalkyl ether, and polyoxypropylene glyceryl ether; and
2-pyrrolidone and N-methyl-2-pyrrolidone.

Among these, from the viewpoint of jetting stability of the ink, the water-soluble organic solvent in the ink preferably includes at least one selected from the group consisting of an alkylene glycol and an alkylene glycol monoalkyl ether.

The content of the water-soluble organic solvent with respect to the total amount of the ink is preferably 10% by mass to 40% by mass and more preferably 15% by mass to 30% by mass.

### <Surfactant>

The ink may contain at least one surfactant.

The kind of the surfactant is not particularly limited, and may be any of an anionic surfactant, a cationic surfactant, a betaine-based surfactant, or a nonionic surfactant. Further, examples of the surfactant include an acrylic surfactant, a fluorine-based surfactant, and a silicone-based surfactant.

A content of the surfactant is preferably 0.1% by mass to 5% by mass and more preferably 0.2% by mass to 2% by mass with respect to the total amount of the ink.

### <Other components>

The ink according to the present disclosure may contain other components in addition to the above components, as necessary.

Examples of other components which can be contained in the ink include known additives such as a water-soluble resin, colloidal silica, a solid wetting agent, an inorganic salt, a fading inhibitor, an emulsion stabilizer, a penetration enhancer, an ultraviolet absorber, a preservative, an antibacterial agent, a pH adjuster, a viscosity adjuster, a rust inhibitor, and a chelating agent.

### <Acid value>

In the ink according to the present disclosure, an acid value (that is, an acid value of the ink itself; hereinafter, also referred to as an "ink acid value") is preferably 1.5 mgKOH/g to 4.5 mgKOH/g, more preferably 1.6 mgKOH/g to 4.3 mgKOH/g, and still more preferably 1.8 mgKOH/g to 4.0 mgKOH/g.

In the present disclosure, the ink acid value is a value measured by neutralization titration.

### <Physical properties>

From the viewpoint of improving jetting stability, a pH (25°C) of the ink according to the present disclosure is preferably 7 to 10 and more preferably 7.5 to 9.5.

The pH of the ink is measured at 25°C using a pH meter, for example, a pH meter (model number "HM-31") manufactured by DKK-Toa Corporation.

A viscosity (30°C) of the ink according to the present disclosure is preferably 0.5 mPa·s to 30 mPa·s, more preferably 2 mPa·s to 20 mPa·s, still more preferably 2 mPa·s to 15 mPa·s, and even more preferably 3 mPa·s to 10 mPa·s.

The viscosity of the ink is measured at 30°C using a viscometer, for example, a TV-22 type viscometer manufactured by TOKI-SANGYO CO. LTD.

A surface tension (25°C) of the ink according to the present disclosure is preferably 60 mN/m or less, more preferably 20 mN/m to 50 mN/m, and still more preferably 25 mN/m to 40 mN/m.

The surface tension of the ink is measured at 25°C using a surface tension meter, for example, by a plate method using an automatic surface tension meter (trade name, "CBVP-Z") manufactured by Kyowa Interface Science Co., Ltd.

### [Ink set]

The ink set according to the present disclosure contains the ink according to the present disclosure and a pretreatment liquid containing water and a coagulating agent.

With the ink set according to the present disclosure, the components (for example, the pigment, the first urethane resin, and the second urethane resin) in the ink according to the present disclosure can be aggregated by the coagulating agent in the pretreatment liquid on the impermeable base material. Therefore, the image quality of the obtained image is further improved.

In addition, since the ink set according to the present disclosure contains the ink according to the present disclosure, the same effect (that is, the improvement in retort resistance of the laminate) as the effect of the ink according to the present disclosure is exhibited.

The ink set according to the present disclosure may contain only one kind of the ink according to the present disclosure, or may contain two or more kinds thereof. For example, the ink set according to the present disclosure may contain two or more kinds of the inks according to the present disclosure having different colors.

The ink set according to the present disclosure may contain one kind of the ink according to the present disclosure and an ink other than the ink according to the present disclosure.

The ink set according to the present disclosure may contain only one kind of the pretreatment liquid, or may contain two or more kinds thereof.

### <Ink>

The ink according to the present disclosure contained in the ink set according to the present disclosure is as described above.

### <Pretreatment liquid>

The pretreatment liquid contained in the ink set according to the present disclosure contains water and a coagulating agent.

### (Water)

The pretreatment liquid contains water.

A content of water is preferably 50% by mass or more and more preferably 60% by mass or more with respect to the total amount of the pretreatment liquid.

The upper limit of the content of water depends on the amount of other components, but is preferably 90% by mass or less and more preferably 80% by mass or less with respect to the total amount of the pretreatment liquid.

### (Coagulating agent)

The pretreatment liquid of the present disclosure contains at least one coagulating agent.

As the coagulating agent, at least one selected from the group consisting of an organic acid, an organic acid salt, a polyvalent metal compound, and a metal complex is preferable, and at least one selected from the group consisting of an organic acid, an organic acid salt, and a polyvalent metal compound is more preferable.

Preferred examples of the coagulating agent also include the coagulating agents described in paragraphs 0122 to 0130 of WO2020/195360A.

### - Organic acid -

The organic acid is an organic compound having an acidic group.

Examples of the acidic group include a phosphoric acid group, a phosphonic acid group, a phosphinic acid group, a sulfuric acid group, a sulfonic acid group, a sulfinic acid group, and a carboxy group.

Among these, from the viewpoint of the aggregation rate of the ink, a phosphoric acid group or a carboxy group is preferable, and a carboxy group is more preferable as the acidic group.

Further, it is preferable that at least a part of the acidic group is dissociated in the pretreatment liquid.

Examples of the organic compound containing a carboxy group include (meth)acrylic acid, poly(meth)acrylic acid, acetic acid, formic acid, benzoic acid, glycolic acid, malonic acid, malic acid (preferably DL-malic acid), maleic acid, succinic acid, glutaric acid, pimelic acid, adipic acid, fumaric acid, citric acid, tartaric acid, phthalic acid, 4-methylphthalic acid, lactic acid, pyrrolidone carboxylic acid, pyrone carboxylic acid, pyrrole carboxylic acid, furan carboxylic acid, pyridine carboxylic acid, coumaric acid, thiophene carboxylic acid, and nicotinic acid.

Among these, from the viewpoint of the aggregation rate of the ink, as the organic compound containing a carboxy group, di- or higher valent carboxylic acid (hereinafter, also referred to as polyvalent carboxylic acid) is preferable, and dicarboxylic acid is more preferable.

Specifically, as the polyvalent carboxylic acid, malonic acid, malic acid, maleic acid, succinic acid, glutaric acid, pimelic acid, adipic acid, fumaric acid, tartaric acid, 4-methylphthalic acid, or citric acid is preferable, and malonic acid, malic acid, tartaric acid, succinic acid, glutaric acid, pimelic acid, adipic acid, or citric acid is more preferable.

It is preferable that the organic acid has a low pKa (for example, 1.0 to 5.0). In this manner, the surface charge of particles such as resin particles or the pigment stably dispersed in the ink by a weakly acidic functional group such as a carboxy group can be reduced by bringing the ink into contact with an organic acid having a lower pKa to degrade the dispersion stability.

It is preferable that the organic acid has a low pKa, high solubility in water, and a valence of divalent or higher. Further, it is more preferable that the organic acid has a high buffer capacity in a pH region with a pKa lower than the pKa of a functional group (for example, a carboxy group) that stably disperses particles in the ink.

### - Polyvalent metal compound -

Examples of the polyvalent metal compound include a polyvalent metal salt.

Examples of the polyvalent metal salt include an organic acid polyvalent metal salt and an inorganic acid polyvalent metal salt.

A polyvalent metal salt of the organic acid (for example, formic acid, acetic acid, or benzoic acid) described above is preferable as the organic acid polyvalent metal salt.

As the inorganic acid polyvalent metal salt, a nitric acid polyvalent metal salt, a hydrochloric acid polyvalent metal salt, or a thiocyanic acid polyvalent metal salt is preferable.

Examples of the polyvalent metal salt include salts of alkaline earth metals of a group 2 (such as magnesium and calcium) in the periodic table, salts of transition metals of a group 3 (such as lanthanum) in the periodic table, salts of metals of a group 13 (such as aluminum) in the periodic table, and salts of lanthanides (such as neodymium).

As the polyvalent metal salt, a calcium salt, a magnesium salt, or an aluminum salt is preferable, and a calcium salt or a magnesium salt is more preferable.

As the polyvalent metal compound, an organic acid polyvalent metal salt is preferable, and an organic acid calcium salt or an organic acid magnesium salt is more preferable.

Further, it is preferable that at least a part of the polyvalent metal compound is dissociated into polyvalent metal ions and counterions in the pretreatment liquid.

The content of the coagulating agent in the pretreatment liquid is preferably in a range of 0.1% by mass to 40% by mass, more preferably in a range of 0.1% by mass to 30% by mass, still more preferably in a range of 1% by mass to 20% by mass, and even still more preferably in a range of 1% by mass to 10% by mass with respect to the total amount of the pretreatment liquid.

### (Resin)

It is preferable that the pretreatment liquid contains at least one resin.

As a result, the adhesiveness between the ink film obtained by the ink and the pretreatment layer obtained by the pretreatment liquid is further improved, and as a result, the retort resistance of the laminate is further improved.

The resin may be any of a non-urethane resin (for example, an acrylic resin, a vinyl chloride resin, or the like) or a urethane resin.

From the viewpoint of further improving the retort resistance of the laminate, it is preferable that the resin in the pretreatment liquid includes a urethane resin.

In the present disclosure, the urethane resin that may be contained in the pretreatment liquid is a third urethane resin.

As described above, from the viewpoint of further improving the retort resistance of the laminate, the preferred aspect of the pretreatment liquid is an aspect in which the pretreatment liquid includes the third urethane resin.

In a case where the pretreatment liquid includes the third urethane resin, the flexibility of the pretreatment layer (that is, the followability to the impermeable base material) is further improved, and as a result, the retort resistance of the laminate is further improved.

### - Third urethane resin -

The third urethane resin may also be a known urethane resin (that is, a resin containing a urethane bond) as in the first urethane resin.

The third urethane resin can also be formed by a reaction between a polyisocyanate and a polyol, as in a known urethane resin. In this case, the second urethane resin may contain a polyisocyanate unit (that is, a structural unit derived from a polyisocyanate) and a polyol unit (that is, a structural unit derived from a polyol).

Specific examples and preferred aspects of the polyol unit and the polyisocyanate unit (as well as the polyol and the polyisocyanate for forming these units) in the third urethane resin are the same as the specific examples and the preferred aspects of the polyol unit and the polyisocyanate unit (as well as the polyol and the polyisocyanate for forming these units) in the first urethane resin described above.

In addition, a preferred range of the weight-average molecular weight of the third urethane resin is the same as the preferred range of the weight-average molecular weight of the first urethane resin.

However, the third urethane resin and the first urethane resin may be the same kind of urethane resin or different kinds of urethane resins.

In addition, the third urethane resin and the second urethane resin may be the same kind of urethane resin or different kinds of urethane resins.

The third urethane resin is preferably a water-insoluble urethane resin.

In this case, the pretreatment liquid preferably contains resin particles including the third urethane resin.

From the viewpoint of further improving the dispersion stability of the resin particles including the third urethane resin and the storage stability of the ink, the third urethane resin preferably includes a polyalkylene glycol monoalkyl ether unit.

Examples of the polyalkylene glycol monoalkyl ether for forming the polyalkylene glycol monoalkyl ether unit include a polymer obtained by addition polymerization of ethylene oxide or propylene oxide to any alcohol (such as methanol, ethanol, 1-propanol, 2-propanol, or 1-butanol).

Specific examples of the polyalkylene glycol monoalkyl ether include polyethylene glycol monomethyl ether, polyethylene glycol monoethyl ether, polyethylene glycol monopropyl ether, polyethylene glycol monobutyl ether, polypropylene glycol monomethyl ether, polypropylene glycol monoethyl ether, polypropylene glycol monopropyl ether, and polypropylene glycol monobutyl ether.

From the viewpoint of further improving the retort resistance of the laminate, the content of the polyalkylene glycol monoalkyl ether unit is preferably in a range of 2% by mass to 30% by mass, more preferably in a range of 3% by mass to 25% by mass, and still more preferably in a range of 5% by mass to 20% by mass with respect to the total amount of the third urethane resin.

### - Glass transition temperature (Tg) -

A preferred range of the glass transition temperature of the third urethane resin is the same as the preferred range of the glass transition temperature of the first urethane resin.

### - Content of third urethane resin with respect to total amount of pretreatment liquid -

A content of the third urethane resin with respect to the total amount of the pretreatment liquid is preferably 1% by mass to 30% by mass, more preferably 2% by mass to 25% by mass, and still more preferably 3% by mass to 30% by mass.

### - Polyol unit A (common polyol unit) -

In the ink set according to the present disclosure, it is preferable that all of the first urethane resin, the second urethane resin, and the third urethane resin contain the polyol unit A (that is, the polyol unit not containing an acid group and is common to the first urethane resin and the second urethane resin) which is at least one of the polyol units that do not include an acid group.

As a result, since the interaction between the third urethane resin in the pretreatment liquid, the pigment dispersing resin containing the first urethane resin in the ink, and the resin particles including the second urethane resin in the ink acts, the image consisting of the pretreatment layer and the ink film is more tough, and as a result, the retort resistance of the laminate is further improved.

In a case where all of the first urethane resin, the second urethane resin, and the third urethane resin contain the polyol unit A (that is, "the polyol unit not containing an acid group" which is common to the first urethane resin, the second urethane resin, and the third urethane resin), each of the first urethane resin, the second urethane resin, and the third urethane resin may contain "a polyol unit not containing an acid group" (that is, "the polyol unit not containing an acid group" which is not common to the first urethane resin, the second urethane resin, and the third urethane resin) other than the polyol unit A.

In addition, in a case where both the first urethane resin and the second urethane resin contain the polyol unit A (that is, "the polyol unit not containing an acid group" which is common to the first urethane resin, the second urethane resin, and the third urethane resin), at least one of the first urethane resin, the second urethane resin, or the third urethane resin may contain a polyol unit that contains an acid group.

In a case where all of the first urethane resin, the second urethane resin, and the third urethane resin contain the polyol unit A (common polyol unit), a proportion of the polyol unit A in all polyol units contained in the third urethane resin (hereinafter, also referred to as a "common polyol ratio" in the third urethane resin) is preferably 40 mol% or more, more preferably 50 mol% or more, and still more preferably 60 mol% or more.

### (Water-soluble organic solvent)

The pretreatment liquid may contain at least one water-soluble organic solvent.

Specific examples of the water-soluble organic solvent that may be contained in the pretreatment liquid are the same as the specific examples of the water-soluble organic solvent that may be contained in the ink.

### (Surfactant)

The pretreatment liquid may contain at least one surfactant.

The kind of the surfactant is not particularly limited, and may be any of an anionic surfactant, a cationic surfactant, a betaine-based surfactant, or a nonionic surfactant. Further, examples of the surfactant include an acrylic surfactant, a fluorine-based surfactant, and a silicone-based surfactant.

A content of the surfactant is preferably 0.1% by mass to 5% by mass and more preferably 0.2% by mass to 1% by mass with respect to the total amount of the pretreatment liquid.

### (Other components)

The pretreatment liquid may contain other components as necessary in addition to the above-described components.

Examples of the other components that can be contained in the pretreatment liquid include the same components as the other components that can be contained in the ink.

### (Physical properties)

The pH of the pretreatment liquid is preferably in a range of 2.0 to 7.0 and more preferably in a range of 2.0 to 4.0.

The pH of the pretreatment liquid can be measured by the same method as the pH of the ink.

From the viewpoint of the application property of the pretreatment liquid, a viscosity of the pretreatment liquid is preferably 0.5 mPa·s to 10 mPa·s and more preferably 1 mPa·s to 5 mPa·s.

The viscosity of the pretreatment liquid can be measured by the same method as the viscosity of the ink.

A surface tension of the pretreatment liquid is preferably 60 mN/m or less, more preferably 20 mN/m to 50 mN/m, and still more preferably 30 mN/m to 45 mN/m.

The surface tension of the pretreatment liquid can be measured by the same method as in the surface tension of the ink.

### [Image recording method]

The image recording method according to the present disclosure uses the ink according to the present disclosure, and includes a step of applying the ink onto an impermeable base material by an ink jet recording method (hereinafter, also referred to as an "ink applying step").

Since the image recording method according to the present disclosure uses the ink according to the present disclosure, the same effect as the effect of the ink according to the present disclosure (that is, improvement in retort resistance of the laminate) is exhibited.

### <Impermeable base material>

In the image recording method according to the present disclosure, an image is recorded by applying the ink according to the present disclosure onto an impermeable base material.

In the present disclosure, the impermeability in the impermeable base material denotes a property that the water absorption rate in 24 hours which is measured in conformity with ASTM D570-98 (2018) is 2.5% or less. Here, the unit "%" of the water absorption rate is on a mass basis. The water absorption rate is preferably 1.0% or less and more preferably 0.5% or less.

Examples of the material of the impermeable base material include glass, a metal (such as aluminum, zinc, or copper), and a resin (such as polyvinyl chloride, cellulose diacetate, cellulose triacetate, cellulose propionate, cellulose butyrate, cellulose acetate butyrate, cellulose nitrate, polyethylene terephthalate, polyethylene, polystyrene, polypropylene, polycarbonate, polyvinyl acetal, nylon, or an acrylic resin).

It is preferable that the material of the impermeable base material is a resin. That is, it is preferable that the impermeable base material is a resin base material.

Examples of the material of the impermeable base material are as described above, but polypropylene, polyethylene, polyethylene terephthalate, nylon, an acrylic resin, or polyvinyl chloride is preferable from the viewpoint of versatility.

As the shape of the impermeable base material, a sheet-like (film-like) or a plate-like impermeable base material is preferable. Examples of the impermeable base material having such a shape include a glass plate, a metal plate, a resin sheet (resin film), paper on which plastic is laminated, paper on which a metal is laminated or vapor-deposited, and a plastic sheet (plastic film) on which a metal is laminated or vapor-deposited.

Examples of the impermeable base material made of a resin include a resin sheet (resin film), and more specific examples thereof include a flexible packaging material for packaging food or the like and a panel for guiding the floor of a mass retailer.

Examples of the impermeable base material include a textile (woven fabric) or nonwoven fabric formed of impermeable fibers in addition to a sheet-like (film-like) or plate-like impermeable base material.

Further, the thickness of the impermeable base material is preferably in a range of 0.1 µm to 1,000 µm, more preferably in a range of 0.1 µm to 800 µm, and still more preferably in a range of 1 µm to 500 µm.

The impermeable base material may be subjected to a hydrophilization treatment. Examples of the hydrophilization treatment include a corona treatment, a plasma treatment, a flame treatment, a heat treatment, an abrasion treatment, a light irradiation treatment (such as a UV treatment), and a flame treatment, but the hydrophilization treatment is not limited thereto. The corona treatment can be performed using, for example, Corona Master (product name, "PS-10S", manufactured by Shinko Electric & Instrumentation Co., Ltd.). The conditions for the corona treatment may be appropriately selected according to the kind of the impermeable base material and the like.

The impermeable base material may be an impermeable base material having transparency.

Here, the expression of "having transparency" denotes that the transmittance of visible light having a wavelength of 400 nm to 700 nm is 80% or greater (preferably 90% or greater).

In a case where the impermeable base material is an impermeable base material having transparency, the image is easily visually recognized through the impermeable base material from the image non-recorded surface side of the impermeable base material.

### <Ink applying step>

The ink applying step is a step of applying the ink of the present disclosure onto the impermeable base material by an ink jet recording method.

The ejection method of the ink by the ink jet recording method is not particularly limited, and for example, any known methods such as an electric charge control method of jetting the ink using electrostatic attraction force, a drop-on-demand method (pressure pulse method) using vibration pressure of a piezoelectric element, an acoustic ink jet method of converting an electric signal into an acoustic beam, irradiating the ink with the acoustic beam, and jetting the ink by using radiation pressure, a thermal ink jet method (BUBBLE JET (registered trademark)) of heating the ink, forming bubbles, and using generated pressure, and the like may be used.

As the ink jet recording method, particularly, it is possible to effectively use the method described in JP1979-59936A (JP-S54-59936A), which is an ink jet recording method of causing an ink to experience a rapid volume change by the action of thermal energy and jetting the ink from a nozzle by using the acting force resulting from the change of state. As the ink jet recording method, a method described in paragraphs 0093 to 0105 of JP2003-306623A can also be applied.

The application of the ink onto the impermeable base material using the ink jet recording method is performed by allowing the ink to be jetted from a nozzle of an ink jet head.

The way of using the ink jet head also includes a shuttle method of performing recording while a short serial head is allowed to scan in the width direction of the recorded medium, and a line method of using a line head in which recording elements are arranged correspondingly to the entire range of one side of the recorded medium.

In the line method, image recording can be performed on the entire surface of the recorded medium by scanning the recorded medium in a direction intersecting the direction in which the recording elements are aligned. In the line method, a transport system such as a carriage that scans a short head in the shuttle system is not necessary. Further, in the line method, since movement of a carriage and complicated scanning control between the short head and the recorded medium are not necessary as compared with the shuttle system, only the recorded medium moves. Therefore, according to the line method, an increase in the recording speed of an image is achieved as compared with the shuttle method.

The ink is preferably applied using an ink jet head having a resolution of 300 dpi or more (more preferably 600 dpi or more and still more preferably 800 dpi or more). Herein, dpi is an abbreviation for dot per inch, and 1 inch is 2.54 cm.

From the viewpoint of obtaining an image with high definition, a droplet amount of the ink is preferably 1 picoliter (pL) to 10 pL and more preferably 1.5 pL to 6 pL.

### (Heating and drying)

The ink applying step may include
applying an ink onto the impermeable base material by an ink jet recording method and heating, and
drying the applied ink.

A method of heating and drying is not particularly limited, and examples thereof include infrared (IR) drying, warm air drying, and heating and drying using a heating device (for example, a heater, a hot plate, a heating furnace, or the like).

The method of heating and drying may be a method of combining two or more of the above-described methods.

The heating and drying can be performed by heating the ink from at least one of the image recorded surface side or the image non-recorded surface side of the impermeable base material.

A heating temperature in the heating and drying of the ink is preferably 35°C or higher, more preferably 40°C or higher, still more preferably 50°C or higher, and even more preferably 60°C or higher.

The upper limit of the heating temperature is not particularly limited, but is preferably 100°C and more preferably 90°C.

A heating time in the heating and drying of the ink is not particularly limited, but is preferably 1 second to 180 seconds, more preferably 1 second to 120 seconds, and still more preferably 1 second to 60 seconds.

### <Pretreatment liquid applying step>

The image recording method according to the present disclosure may include, before the ink applying step, a step of applying the above-described pretreatment liquid to a surface to which the ink is applied in the ink applying step in advance.

Examples of an embodiment of the image recording method according to the present disclosure in this case include an embodiment in which the ink set according to the present disclosure is used.

The image recording method according to the present embodiment in which the ink set according to the present disclosure is used includes
a pretreatment liquid applying step of applying a pretreatment liquid onto an impermeable base material, and
an ink applying step of applying an ink according to the present disclosure onto the impermeable base material to which the pretreatment liquid has been applied, by an ink jet recording method.

A method of applying the pretreatment liquid is not particularly limited, and examples thereof include known methods such as a coating method, a dipping method, and an ink jet recording method.

Examples of the coating method include known coating methods using a bar coater, an extrusion die coater, an air doctor coater, a blade coater, a rod coater, a knife coater, a squeeze coater, and a reverse roll coater.

After the application of the pretreatment liquid, the pretreatment liquid applied onto the impermeable base material may be heated and dried. Examples of the means for heating and drying the pretreatment liquid include known heating means such as a heater, known air blowing means such as a dryer, and means for combining these.

Examples of the method of heating and drying the pretreatment liquid include a method of applying heat using a heater or the like from a side of the impermeable base material opposite to the surface onto which the pretreatment liquid has been applied; a method of applying warm air or hot air to the surface of the impermeable base material onto which the pretreatment liquid has been applied; a method of applying heat using an infrared heater from the surface of the impermeable base material onto which the pretreatment liquid has been applied or from a side of the impermeable base material opposite to the surface onto which the pretreatment liquid has been applied; and a method of combining a plurality of these methods.

The heating temperature of heating and drying the pretreatment liquid is preferably 35°C or higher and more preferably 40°C or higher. The upper limit of the heating temperature is not particularly limited, but is preferably 100°C, more preferably 90°C, and still more preferably 70°C.

The time of heating and drying the pretreatment liquid is not particularly limited, but is preferably in a range of 0.5 seconds to 60 seconds, more preferably in a range of 0.5 seconds to 20 seconds, and still more preferably in a range of 0.5 seconds to 10 seconds.

### [Method of producing laminate]

A method of producing a laminate according to the present disclosure includes
a step of obtaining an image recorded material that comprises the impermeable base material and an image disposed on the impermeable base material by the image recording method of the present disclosure described above, and
a step of laminating a base material for lamination on a side of the image recorded material where the image has been disposed, to obtain a laminate.

Since the method of producing a laminate according to the present disclosure includes the image recording method according to the present disclosure described above, the same effects as the effects of the image recording method according to the present disclosure described above are exhibited. Specifically, a laminate having excellent retort resistance is obtained.

The step of obtaining an image recorded material can refer to the image recording method of the present disclosure.

The step of obtaining a laminate is a step of laminating the base material for lamination on a side of the image recorded material where the image has been disposed, to obtain a laminate.

The lamination can be performed by a method of superimposing the base material for lamination on the side of the image recorded material where the image has been disposed via another layer (for example, an adhesive layer) and attaching the base material thereto, a method of attaching the base material for lamination to the side of the image recorded material where the image has been disposed via a laminator in a state where the base material is superimposed on the side thereof, or the like. In the latter case, a commercially available laminator can be used.

The lamination temperature in a case of carrying out the lamination is not particularly limited. For example, in a case where the image recorded material and the base material for lamination are attached to each other via another layer (for example, an adhesive layer), the temperature may be 20°C or higher. Further, in a case where a laminator is used, the temperature of a laminating roll may be set to be in a range of 20°C to 80°C. The pressure-bonding force between a pair of laminating rolls may be appropriately selected as necessary.

It is preferable that the base material for lamination is a resin base material.

The resin base material is not particularly limited, and examples thereof include a base material consisting of a thermoplastic resin.

A base material obtained by molding a thermoplastic resin in a sheet shape is exemplified as the resin base material.

It is preferable that the resin base material contains polypropylene, polyethylene terephthalate, nylon, polyethylene, or polyimide.

The shape of the resin base material is not particularly limited, but it is preferable that the resin base material has a sheet shape. The thickness of the resin base material is preferably in a range of 10 µm to 200 µm and more preferably in a range of 10 µm to 100 µm.

In the step of obtaining a laminate, the base material for lamination may be laminated directly on a side of the image recorded material where the image has been disposed or via another layer (for example, an adhesive layer).

In a case where the base material for lamination is laminated directly on a side of the image recorded material where the image has been disposed, the lamination can be performed by a known method such as thermocompression bonding or thermal fusion welding.

Further, in a case where the base material for lamination is laminated on a side of the image recorded material where the image has been disposed via an adhesive layer, the lamination can be performed by, for example, a method of coating the side of the image recorded material where the image has been disposed with an adhesive, placing the base material for lamination, and bonding the image recorded material to the base material for lamination.

Further, in the case where the base material for lamination is laminated on a side of the image recorded material where the image has been disposed via an adhesive layer, the lamination can also be performed by an extrusion lamination method (that is, sandwich lamination) or the like.

It is preferable that the adhesive layer contains an isocyanate. In a case where the adhesive layer contains an isocyanate, since the adhesiveness between the adhesive layer and the image is further improved, the retort resistance can be further improved.

### Examples

Hereinafter, Examples of the present disclosure will be described, but the present disclosure is not limited to the following Examples.

### [Examples 1 to 25 and Comparative Examples 1 to 3]

### <Preparation of aqueous dispersion liquid of third urethane resin (urethane resins A to F) for pretreatment liquid>

As the aqueous dispersion liquid of the third urethane resin for the pretreatment liquid, an aqueous dispersion liquid of each of the urethane resins A to F was prepared.

Each of the urethane resins A to F is a specific example of the third urethane resin in a form of resin particles.

Hereinafter, the details will be described.

### (Preparation of aqueous dispersion liquid of urethane resin A)

In a three-neck flask,
14.4 g of isophorone diisocyanate (IPDI),
87.6 g of PCD-2000 (polycarbonate diol, molecular weight: 2,000, "DURANOL T5652" manufactured by Asahi Kasei Corporation) as a polyol not containing an acid group, and
80.0 g of ethyl acetate were charged, and the mixture was heated to 70°C.

0.1 g of NEOSTANN U-600 (manufactured by NITTO KASEI Co., Ltd., inorganic bismuth catalyst; hereinafter also referred to as "U-600") was added thereto, and the mixture was stirred at 70°C for 3 hours.

Next, polyethylene glycol monomethyl ether (number-average molecular weight of 550) (18.0 g) was added thereto, and the mixture was stirred at 70°C for 3 hours.

Next, isopropanol (IPA) (84.5 g) as a terminal blocking material and ethyl acetate (126.5 g) were added thereto, and the mixture was stirred at 70°C for 7 hours. The mixture was stirred for 7 hours and naturally cooled to room temperature, and the concentration thereof was adjusted using ethyl acetate, thereby obtaining a 30% by mass solution of urethane resin A (solvent: mixed solvent of IPA and ethyl acetate).

100 g of distilled water was added to 100 g of the obtained 30% by mass solution of the urethane resin A, and the mixture was emulsified at 12,000 revolutions per minute (rpm) for 10 minutes at room temperature using a homogenizer to obtain an emulsion.

The obtained emulsion was heated to 50°C and stirred at 50°C for 5 hours to distill off ethyl acetate from the liquid.

The liquid from which ethyl acetate had been distilled off was diluted with distilled water so that the solid content reached 25% by mass, thereby obtaining an aqueous dispersion liquid of urethane resin A (solid content of 25% by mass).

The urethane resin A is a third urethane resin in the form of resin particles.

### (Preparation of aqueous dispersion liquid of each of urethane resins B to F)

An aqueous dispersion liquid of each of the urethane resins B to F was prepared in the same manner as in the preparation of the aqueous dispersion liquid of the urethane resin A, except that PCD-2000 used as a polyol not containing an acid group was changed to the polyols shown in Tables 1 to 3 in the same molar number.

### (Description of polyol)

In Tables 1 to 3, "polyol" in each of the first urethane resin to the third urethane resin means a polyol not containing an acid group, and the details thereof are as follows.
PTMG-2000 ... polytetramethylene glycol, molecular weight: 2,000, manufactured by Mitsubishi Chemical Corporation
P-2010 ... polyester polyol, molecular weight: 2,000, manufactured by Kuraray Co., Ltd.
PCD-1000 ... polycarbonate diol, molecular weight: 1,000, manufactured by Asahi Kasei Corporation, "DURANOL T5651"

In Tables 1 to 3, "PCD-2000 + PTMG-2000" in the third urethane resin of Examples 9 and 10, the first urethane resin of Examples 11 and 12, and the second urethane resin of Examples 13 and 14 means that PCD-2000 and PTMG-2000 are used in combination as two polyols not containing an acid group.

### (Description of common polyol and common polyol ratio (mol%))

The "common polyol" means a polyol that is a base of a polyol unit A that is a polyol unit common to the first urethane resin to the third urethane resin (or common to the first urethane resin and the second urethane resin) and does not contain an acid group. The "common polyol" (that is, the polyol that is a base of the polyol unit A) in the present Example group is PCD-2000 (polycarbonate diol, molecular weight: 2,000).

In Tables 1 to 3, "common polyol ratio (mol%)" means a proportion of the common polyol in all polyols used.

For example, "common polyol ratio (mol%)" in the third urethane resin of Examples 9 and 10, the first urethane resin of Examples 11 and 12, and the second urethane resin of Examples 13 and 14 means a proportion (mol%) of PCD-2000 (common polyol) in the total of PCD-2000 and PTMG-2000.

### <Preparation of aqueous dispersion liquid of non-urethane resin for pretreatment liquid; Example 25>

As an aqueous dispersion liquid of a non-urethane resin for a pretreatment liquid, an aqueous dispersion liquid of a vinyl chloride resin ("VINBRAN 2687" manufactured by Nissin Chemical Co., Ltd.) was prepared.

### <Preparation of pretreatment liquid>

A pretreatment liquid having the following composition was prepared using an aqueous dispersion liquid of the third urethane resin or an aqueous dispersion liquid of the non-urethane resin, and other components among the following components.

### - Composition of pretreatment liquid -

· Third urethane resin (any of urethane resins A to F) or non-urethane resin (vinyl chloride resin) described in Tables 1 to 3 ... 10% by mass
· Glutaric acid as coagulating agent ... 4% by mass
· Surfactant (product name "OLFINE E1010", manufactured by Nissin Chemical Co., Ltd.) ... 0.5% by mass
   · Antifoaming agent (product name "BYK-024", manufactured by BYK Co., Ltd.) ... 0.01% by mass
· Water ... remaining amount set such that total amount of composition reached 100% by mass

### <Preparation of aqueous solution of first urethane resin (pigment dispersing resins U1 to U10) for pigment dispersion in ink>

Aqueous solution of each of the pigment dispersing resins U1 to U10 was prepared as an aqueous solution of the first urethane resin for pigment dispersion in the ink.

Each of the pigment dispersing resins U1 to U10 is a specific example of the first urethane resin in a form of a water-soluble resin.

Hereinafter, the details will be described.

### (Preparation of aqueous solution of pigment dispersing resin U1)

Dimethylolpropionic acid (DMPA) (28.35 g) as a polyol containing an acid group,
hexamethylene diisocyanate (HDI) (38.13 g),
PCD-2000 (polycarbonate diol, molecular weight: 2,000, "DURANOL T5652" manufactured by Asahi Kasei Corporation) (10.02 g) as a polyol not containing an acid group, and
ethyl acetate (48.45 g) were charged into a three-neck flask, and the mixture was heated to 70°C.
0.1 g of NEOSTANN U-600 (manufactured by NITTO KASEI Co., Ltd., inorganic bismuth catalyst; hereinafter also referred to as "U-600") was added thereto, and the mixture was stirred at 70°C for 7 hours.

Next, isopropanol (IPA) (53.55 g) as a terminal blocking material and ethyl acetate (76.5 g) were added thereto, and the mixture was stirred at 70°C for 7 hours. After stirring for 7 hours, the mixture was cooled to room temperature, and then concentration adjustment was performed using ethyl acetate to obtain a 30% by mass solution (solvent: mixed solvent of IPA and ethyl acetate) of the pigment dispersing resin U1 as the first urethane resin.

Distilled water (100 g) was added to the obtained 30% by mass solution (100 g) of the pigment dispersing resin U1, and a sodium hydroxide aqueous solution was added thereto while stirring. Next, the liquid was heated to 50°C and stirred at 50°C for 5 hours to distill off IPA and ethyl acetate from the liquid.

The liquid from which IPA and ethyl acetate were distilled off was diluted with distilled water such that the content of solid contents was 25% by mass, thereby obtaining an aqueous solution (solid contents: 25% by mass) of the pigment dispersing resin U1 as the first urethane resin.

### (Preparation of aqueous solution of each of pigment dispersing resins U2 to U10)

Aqueous solution of each of the pigment dispersing resins U2 to U10 was prepared in the same manner as in the preparation of the aqueous solution of the pigment dispersing resin U1, except that PCD-2000 used as the polyol was changed to the polyols shown in Tables 1 to 3 in the same molar number.

In Tables 1 to 3, each of the polyols, the common polyols, and the common polyol ratio (mol%) is as described above.

In Tables 1 to 3,
Tg (°C) is the glass transition temperature (°C) of the corresponding resin,
acid value (mgKOH/g) is the acid value (mgKOH/g) of the corresponding resin, and
the amount (% by mass) is the content (% by mass) of the resin corresponding to the entire ink.

### <Preparation of aqueous solution of non-urethane resin for pigment dispersion in ink; Comparative Examples 1 and 3>

As an aqueous solution of a non-urethane resin for pigment dispersion in the ink, an aqueous solution of an acrylic resin ("Joncryl 60J" manufactured by BASF SE) was prepared.

### <Preparation of aqueous dispersion liquid of second urethane resin (urethane resins 1 to 9) for resin particles in ink>

Aqueous dispersion liquids of each of the urethane resins 1 to 9 were prepared as an aqueous dispersion liquid of a second urethane resin for resin particles in the ink.

Each of the urethane resins 1 to 9 is a specific example of the second urethane resin in a form of resin particles.

Hereinafter, the details will be described.

### (Preparation of aqueous dispersion liquid of urethane resin 1)

Dimethylolpropionic acid (DMPA) (3.34 g) as a polyol containing an acid group, isophorone diisocyanate (IPDI) (13.973 g),
PCD-2000 (polycarbonate diol, molecular weight: 2,000, "DURANOL T5652" manufactured by Asahi Kasei Corporation) (70.07 g) as a polyol not containing an acid group, and
ethyl acetate (55.35 g) were charged into a three-neck flask, and the mixture was heated to 70°C.

0.1 g of NEOSTANN U-600 (manufactured by NITTO KASEI Co., Ltd., inorganic bismuth catalyst; hereinafter also referred to as "U-600") was added thereto, and the mixture was stirred at 70°C for 7 hours.

Next, isopropanol (IPA) (61.171 g) as a terminal blocking material and ethyl acetate (87.39 g) were added thereto, and the mixture was stirred at 70°C for 7 hours. After stirring for 7 hours, the mixture was cooled to room temperature, and then concentration adjustment was performed using ethyl acetate to obtain a 30% by mass solution (solvent: mixed solvent of IPA and ethyl acetate) of the urethane resin 1 as the second urethane resin.

100 g of distilled water was added to the obtained 30% by mass solution (100 g) of the urethane resin 1, a sodium hydroxide aqueous solution was added thereto while stirring, and the mixture was emulsified at 12,000 rpm for 10 minutes using a homogenizer at room temperature to obtain an emulsion.

The obtained emulsion was heated to 50°C and stirred at 50°C for 5 hours to distill off IPA and ethyl acetate from the liquid.

The liquid from which IPA and ethyl acetate were distilled off was diluted with distilled water such that the content of solid contents was 25% by mass, thereby obtaining a water dispersion liquid (solid contents: 25% by mass) of the urethane resin 1 as the second urethane resin.

### (Preparation of aqueous solution of each of urethane resins 2 to 9)

Aqueous solution of each of the urethane resins 2 to 9 was prepared in the same manner as in the preparation of the aqueous solution of the urethane resin 1, except that the PCD-2000 used as the polyol not containing an acid group was changed to the polyols shown in Tables 1 to 3 in the same molar amount.

### <Preparation of water dispersion liquid of non-urethane resin for resin particles in ink>

As a water dispersion liquid of a non-urethane resin for resin particles in the ink,
each of a water dispersion liquid of an acrylic resin ("NEOCRYL A-1094" manufactured by CAVESTRO); and a water dispersion liquid ("VINIBRAN 701" manufactured by Nissin Chemical Co., Ltd.) of a vinyl chloride resin was prepared.

### <Preparation of magenta pigment dispersion liquid>

A magenta pigment dispersion liquid was prepared as follows using the aqueous solution of the pigment dispersing resin (specifically, the aqueous solution of the first urethane resin or the aqueous solution of the non-urethane resin) and a magenta pigment (C.I. Pigment Red 122, manufactured by Dainichiseika Color & Chemicals Mfg. Co., Ltd.).

The magenta pigment (30 parts by mass), the aqueous solution of the pigment dispersing resin (solid contents: 25% by mass) (40 parts by mass), water (115 parts by mass), and propylene glycol (15 parts by mass) were mixed to obtain a mixed liquid. The mixed liquid was dispersed for 3 hours at a rotation speed of 2,500 rpm using a beads mill (bead diameter: 0.1 mmφ zirconia beads).

As a result, a magenta pigment dispersion liquid having a concentration of solid contents of 15% by mass of the magenta pigment was obtained.

### <Preparation of ink>

An ink having the following composition was prepared using
the above-described magenta pigment dispersion liquid,
the above-described water dispersion liquid (specifically, the above-described water dispersion liquid of the second urethane resin or the above-described water dispersion liquid of the non-urethane resin) of resin particles, and
the other components of the following components.

### - Formulation of ink -

· Magenta pigment
... 3% by mass
· Pigment dispersing resin (the first urethane resin or the non-urethane resin described in Tables 1 to 3)
... amount (% by mass) described in Tables 1 to 3
· Water-soluble organic solvent (propylene glycol)
... 20% by mass
· Water-soluble organic solvent (propylene glycol monomethyl ether)
... 1% by mass
· Surfactant (product name "Surfynol 2502", manufactured by Nissin Chemical Co., Ltd.)
... 1% by mass
· Surfactant (product name "BYK-349", manufactured by BYK)
... 0.5% by mass
· Water-soluble resin: polyvinylpyrrolidone (product name "PVP K-15", manufactured by ASHLAND Inc.)
... 0.1% by mass
· Resin particles (the second urethane resin or the non-urethane resin described in Tables 1 to 3)
... amount (% by mass) described in Tables 1 to 3
· Water ... remaining amount set such that total amount of composition reached 100% by mass

In Tables 1 to 3,
Ink acid value (mgKOH/g) is the acid value (mgKOH/g) of the entire ink,
the Tg difference (°C) is the absolute value of the difference between the glass transition temperature (°C) of the first urethane resin and the glass transition temperature (°C) of the second urethane resin, and
the urethane resin ratio (% by mass) is the ratio (% by mass) of urethane resin to the entire resin components contained in the ink.

### <Image recording>

Image recording was performed using the pretreatment liquid and the ink.

An ink jet recording device comprising a transport system for continuously transporting a long base material, a wire bar coater for coating the base material with the pretreatment liquid, and an ink jet head for applying the ink was prepared.

Further, a polyethylene terephthalate (PET) base material ("FE2001", manufactured by Futamura Chemical Co., Ltd.(thickness of 12 µm, width of 780 mm, length of 4000 m), hereinafter, referred to as "impermeable base material A")) serving as an impermeable base material was prepared as the base material.

The impermeable base material A was coated with the pretreatment liquid using a wire bar coater such that the amount of the pretreatment liquid to be applied reached approximately 1.7 g/m², and the pretreatment liquid was dried at 50°C for 2 seconds.

The ink was jetted from the ink jet head and applied in the form of a solid image to the surface of the impermeable base material A, which had been coated with the pretreatment liquid, while the impermeable base material A was continuously transported at 50 m/min using the ink jet recording device. A solid image was recorded by drying the applied ink with warm air at 80°C for 30 seconds, thereby obtaining an image recorded material.

### - Ink application conditions -

Ink jet head: 1200 dpi/30 inch-width piezo full line head
Amount of ink jetted from ink jet head: 3.0 picoliters (pL)
Driving frequency: 41 kHz (transportation speed of base material: 50 m/min)

### [Evaluation]

The following evaluations were performed for each of Examples and Comparative Examples.

The results thereof are shown in Tables 1 to 3.

### (Retort resistance of laminate)

Using a dry laminating machine (product name "FL2", manufactured by Fujimech Co., Ltd.), an adhesive for dry lamination (main agent LX-500 (polyester urethane polyol)/curing agent KR-90S (polyisocyanate); manufactured by DIC Corporation) was applied onto the solid image of the image recorded material, and a non-stretched polypropylene film (product name "FRTK-G", manufactured by Futamura Chemical Co., Ltd., thickness: 60 µm) was laminated thereon as a base material for lamination. The base material for lamination and the image recorded material were bonded to each other in this state, thereby obtaining a laminate.

The obtained laminate was aged at 40°C for 72 hours.

Two sheets of sample pieces having a length of 200 mm and a width of 200 mm were cut out from the aged laminate. The cut-out sample pieces were overlapped with each other and three sides thereof were heat-sealed to form a bag. The obtained bag was filled with pure water and sealed by heat sealing.

The bag sealed as described above was placed in an autoclave for retort food (small-scale sterilizer) (product name "SR-240", manufactured by Tomi Seiko Co., Ltd.), and a heating and pressurization sterilization treatment (that is, a retort treatment) was performed at 120°C for 10 minutes.

After the retort treatment, the bag was taken out and the state of the bag was visually observed. Specifically, the retort resistance was evaluated based on the presence or absence of deformation of the bag and the lamination float.

The evaluation standards are as follows.

The laminate floating is a state in which the image or the base material for lamination is peeled off and thus floating occurs.

### - Evaluation standard for retort resistance of laminate -

5: Deformation and laminate floating were not observed.
4: Laminate floating was not found, but deformation was confirmed.
3: Laminate floating was confirmed at one site.
2: Laminate floating was confirmed at a plurality of sites.
1: Laminate floating was confirmed on the entire surface of the sample piece.

### (Storage stability)

The viscosity of the ink that was allowed to stand under a condition of 25°C for 1 hour after the preparation (hereinafter, referred to as "viscosity before storage") and the viscosity of the ink that was stored in a sealed state under a condition of 60°C for 14 days after the preparation (hereinafter, referred to as "viscosity after storage") were respectively measured. Both the viscosity before storage and the viscosity after storage were measured under conditions of 30°C at 100 rpm (revolutions per minute) using VISCOMETER TV-22 (manufactured by TOKI SANGYO CO. LTD). Here, the sealed state indicates a state in which the contents are sealed in a container and the amount of decrease in the mass of the contents is less than 1% by mass in a case where the contents are stored under the conditions of 50°C for 14 days.

A value obtained by subtracting the viscosity before storage from the viscosity after storage was calculated as a degree of an increase in viscosity. As the degree of an increase in viscosity decreases, the storage stability is excellent. The evaluation standards are as follows.
5: The degree of an increase in viscosity was less than 0.3 mPa·s.
4: The degree of an increase in viscosity was 0.3 mPa·s or greater and less than 0.5 mPa·s.
3: The degree of an increase in viscosity was 0.5 mPa·s or greater and less than 1.0 mPa·s.
2: The degree of an increase in viscosity was 1.0 mPa·s or greater and less than 2.0 mPa·s.
1: The degree of an increase in viscosity was 2.0 mPa·s or greater.

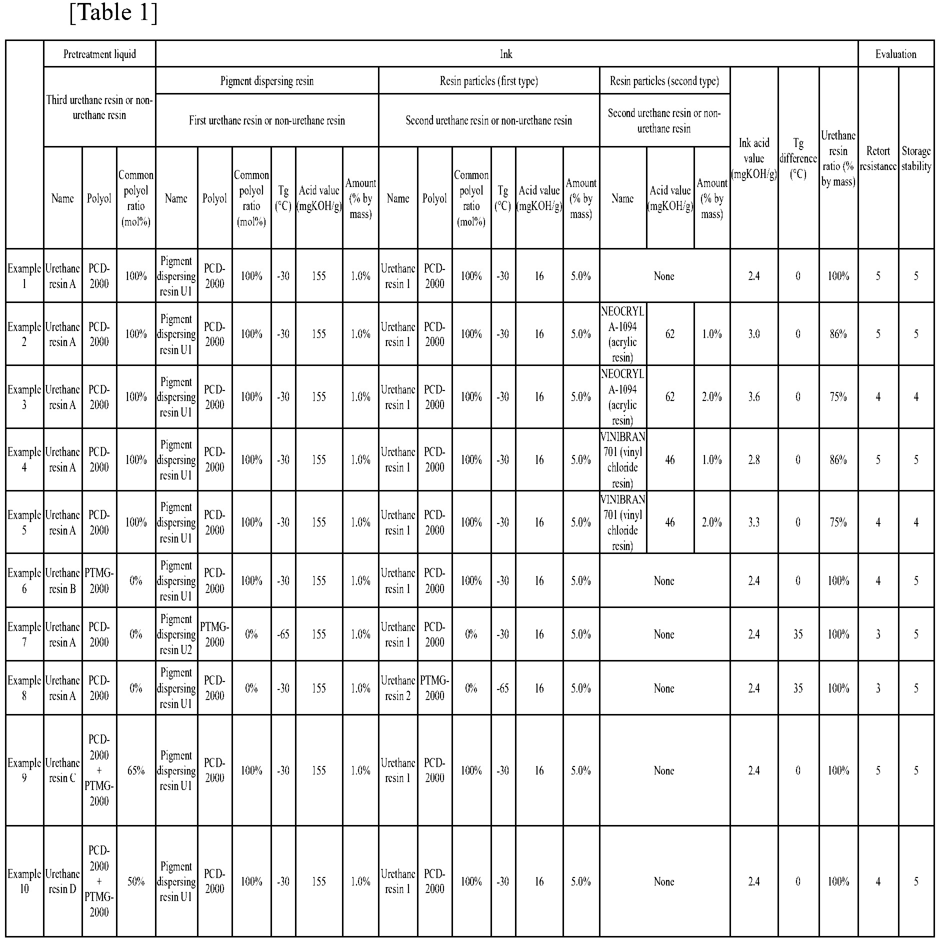

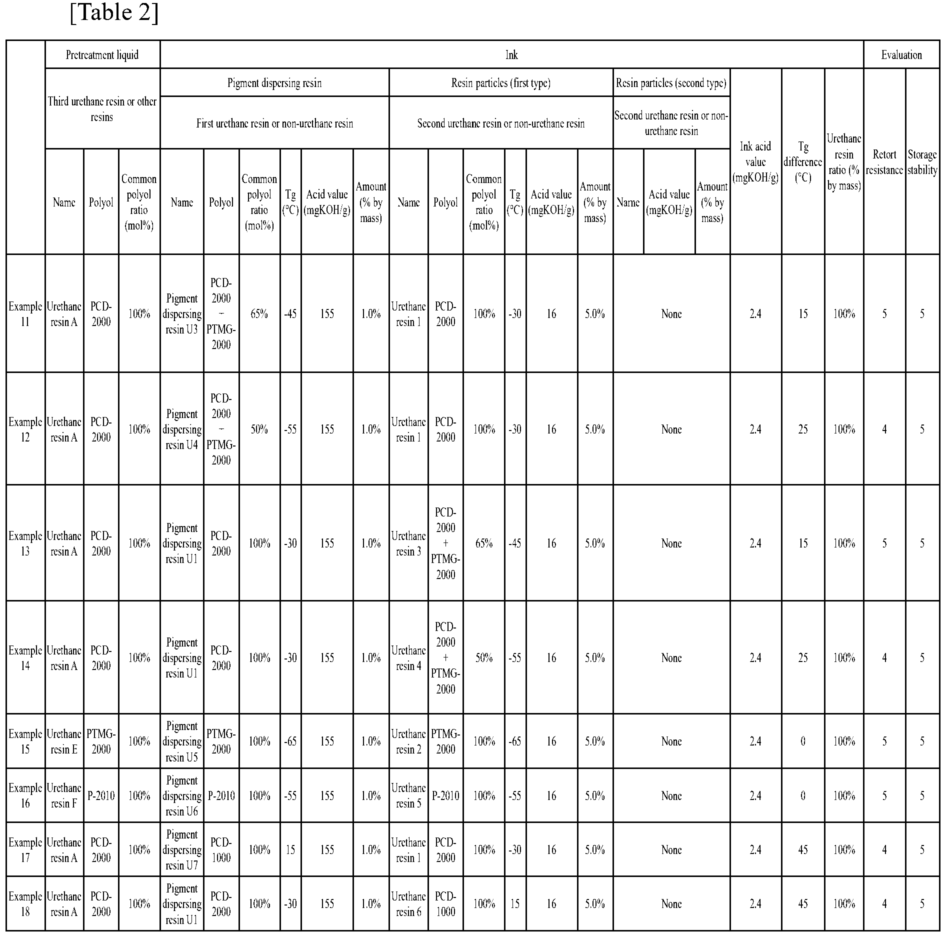

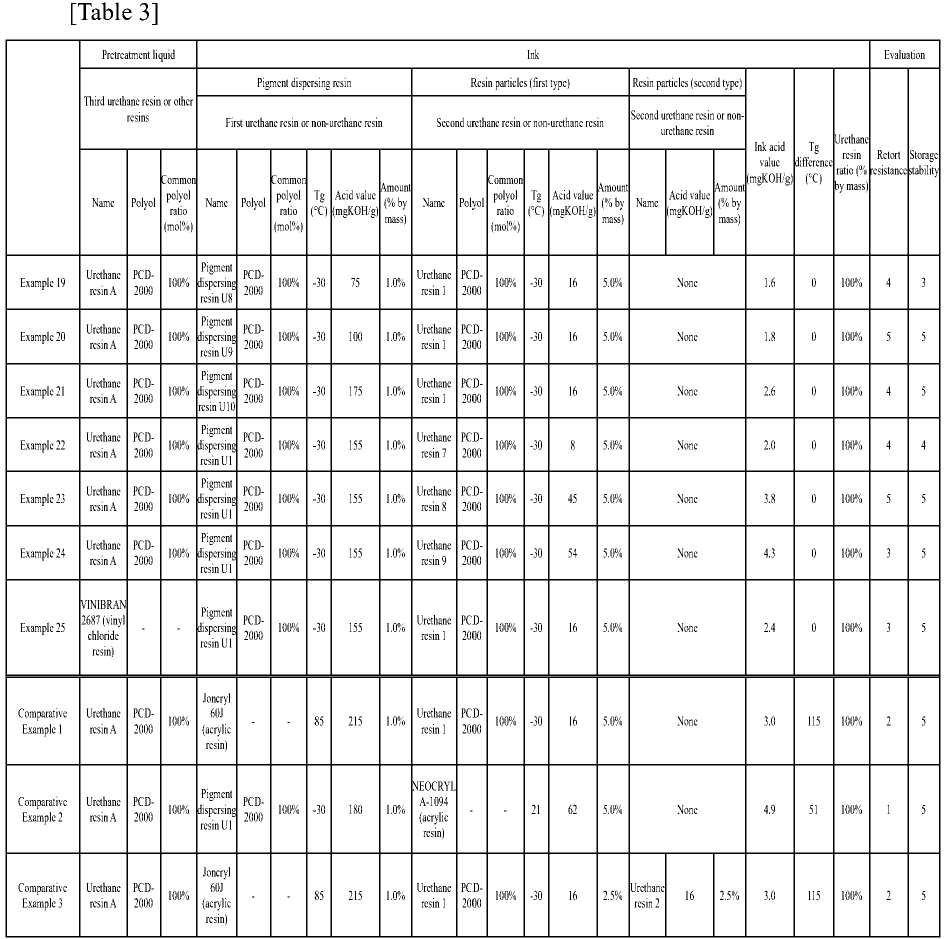

As shown in Tables 1 to 3, in each of Examples using an ink containing water, a pigment, a pigment dispersing resin, and resin particles, in which the pigment dispersing resin contains the first urethane resin and the resin particles contain the second urethane resin, the retort resistance of the laminate is excellent and the storage stability of the ink is excellent.

On the other hand, in Comparative Examples 1 and 3 in which the pigment dispersing resin contains an acrylic resin instead of the urethane resin, and Comparative Example 2 in which the resin particles contain an acrylic resin instead of the urethane resin, the retort resistance of the laminate is insufficient.

From the results of Examples 2 to 5, it can be seen that, in a case where the ratio of the urethane resin in the entire resin component was 80% by mass or more (Examples 2 and 4), the retort resistance of the laminate was further improved.

From the results of Examples 1, 6, 7, and 8, it can be seen that, in a case where both the first urethane resin and the second urethane resin contain the polyol unit A (that is, the common polyol unit) which is at least one of the polyol units not containing an acid group (Examples 1 and 6), the retort resistance of the laminate was further improved.

From the results of Examples 11 and 12, it can be seen that, in a case where the common polyol ratio in the first urethane resin (that is, the proportion of the polyol unit A (that is, the common polyol unit) in all the polyol units contained in the first urethane resin) was 60 mol% or more (Example 11), the retort resistance of the laminate was further improved.

From the results of Examples 13 and 14, it can be seen that, in a case where the common polyol ratio in the second urethane resin (that is, the proportion of the polyol unit A (that is, the common polyol unit) in all the polyol units contained in the second urethane resin) was 60 mol% or more (Example 13), the retort resistance of the laminate was further improved.

From the results of Examples 1, 17, and 18, it can be seen that, in a case where the Tg difference (that is, the absolute value of the difference between the glass transition temperature of the first urethane resin and the glass transition temperature of the second urethane resin) was 40°C or less (Example 1), the retort resistance of the laminate was further improved.

From the results of Examples 19 to 21, it can be seen that, in a case where the acid value of the first urethane resin was 80 mgKOH/g to 170 mgKOH/g (Example 20), the retort resistance of the laminate was further improved.

From the results of Examples 22 to 24, it can be seen that, in a case where the acid value of the second urethane resin was 10 mgKOH/g to 50 mgKOH/g (Example 23), the retort resistance of the laminate was further improved.

From the results of Examples 19 and 20, it can be seen that, in a case where the ink acid value was 1.8 mgKOH/g or more (Example 20), the retort resistance of the laminate and the storage stability of the ink were further improved.

From the results of Examples 23 and 24, it can be seen that, in a case where the ink acid value was 4.0 mgKOH/g or less (Example 23), the retort resistance of the laminate was further improved.

From the results of Examples 20, 21, and 25, it can be seen that, in a case where the pretreatment liquid contains the third urethane resin (Examples 20 and 21), the retort resistance of the laminate was further improved.

From the results of Examples 1 and 6, it can be seen that, in a case where all of the first urethane resin, the second urethane resin, and the third urethane resin contain the polyol unit A (that is, the common polyol unit) which is at least one kind of polyol unit containing no acid group (Example 1), the retort resistance of the laminate was further improved.

From the results of Examples 9 and 10, it can be seen that, in a case where the common polyol ratio in the third urethane resin (that is, the proportion of the polyol unit A (that is, the common polyol unit) in all the polyol units contained in the third urethane resin) was 60 mol% or more (Example 9), the retort resistance of the laminate was further improved.

[Examples 101 to 105, 111 to 114, and 117 to 124]

In each of Examples 1 to 5, 11 to 14, and 17 to 24 in which the common pretreatment liquid was used, the same operation as in each of Examples 1 to 5, 11 to 14, and 17 to 24 was performed except that the application of the pretreatment liquid was omitted (Examples 101 to 105, 111 to 114, and 117 to 124).

As a result, in Examples 101 to 105, 111 to 114, and 117 to 124, the same results as in each of Examples 1 to 5, 11 to 14, and 17 to 24 were obtained for the retort resistance of the laminate.

As a result, it was confirmed that the presence or absence of the application of the pretreatment liquid has not affected the retort resistance of the laminate.

The disclosure of JP2023-095065 filed on June 8, 2023 is incorporated herein by reference in its entirety.

All documents, patent applications, and technical standards described in the present specification are incorporated herein by reference to the same extent as in a case of being specifically and individually noted that individual documents, patent applications, and technical standards are incorporated by reference.

## Claims

1. An ink jet ink for an impermeable base material, comprising:
water;
a pigment;
a pigment dispersing resin; and
resin particles,
wherein the pigment dispersing resin contains a first urethane resin, and
the resin particles contain a second urethane resin.

2. The ink jet ink for an impermeable base material according to claim 1,
wherein a ratio of the urethane resin in all contained resin components is 80% by mass or more.

3. The ink jet ink for an impermeable base material according to claim 1,
wherein both the first urethane resin and the second urethane resin contain a polyol unit A that is at least one of polyol units not containing an acid group.

4. The ink jet ink for an impermeable base material according to claim 3,
wherein a proportion of the polyol unit A in the polyol units not containing an acid group, which is contained in the first urethane resin, is 60 mol% or more.

5. The ink jet ink for an impermeable base material according to claim 3,
wherein a proportion of the polyol unit A in the polyol units not containing an acid group, which is contained in the second urethane resin, is 60 mol% or more.

6. The ink jet ink for an impermeable base material according to claim 1,
wherein an absolute value of a difference between a glass transition temperature of the first urethane resin and a glass transition temperature of the second urethane resin is 40°C or lower.

7. The ink jet ink for an impermeable base material according to claim 1,
wherein an acid value of the first urethane resin is 80 mgKOH/g to 170 mgKOH/g, and
an acid value of the second urethane resin is 10 mgKOH/g to 50 mgKOH/g.

8. The ink jet ink for an impermeable base material according to claim 1,
wherein an acid value of the ink jet ink is 1.8 mgKOH/g to 4.0 mgKOH/g.

9. An ink set comprising:
the ink jet ink for an impermeable base material according to any one of claims 1 to 8; and
a pretreatment liquid containing water and a coagulating agent.

10. The ink set according to claim 9,
wherein the pretreatment liquid further contains a third urethane resin.

11. The ink set according to claim 10,
wherein all of the first urethane resin, the second urethane resin, and the third urethane resin contain a polyol unit A that is at least one of polyol units not containing an acid group.

12. The ink set according to claim 11,
wherein a proportion of the polyol unit A in the polyol units not containing an acid group, which is contained in the third urethane resin, is 60 mol% or more.

13. An image recording method in which the ink jet ink for an impermeable base material according to any one of claims 1 to 8 is used, the method comprising:
a step of applying the ink jet ink for an impermeable base material onto an impermeable base material by an ink jet recording method.

14. An image recording method in which the ink set according to claim 9 is used, the method comprising:
a step of applying the pretreatment liquid onto an impermeable base material; and
a step of applying the ink jet ink for an impermeable base material onto the impermeable base material to which the pretreatment liquid has been applied, by an ink jet recording method.

15. A method of producing a laminate, comprising:
a step of obtaining an image recorded material that includes the impermeable base material and an image disposed on the impermeable base material by the image recording method according to claim 13; and
a step of laminating a base material for lamination on a side of the image recorded material on which the image is disposed, to obtain a laminate.
